# FASCICULE DE BREVET EUROPEEN

(11) **EP 0 768 626 B1**
(45) Date de publication et mention de la délivrance du brevet: **26.04.2000**
(21) Numéro de dépôt: 96402120.8
(22) Date de dépôt: 04.10.1996
(51) Int. Cl.: G07C 9/00, G07B 15/02, G06K 7/08

(54) **Système de communication sans contact à modulation de phase et téléalimentation entre bornes et objets portatifs**
Berührungsloses Kommunikationssystem mit Phasenmodulation und Fernspeisung zwischen Endgeräten und tragbaren Gegenständen
Contactless communication system with phase modulation and remote feeding between terminals and portable articles

(30) Priorité: 13.10.1995 FR 9512017
(43) Date de publication de la demande: 16.04.1997
(73) Titulaire: REGIE AUTONOME DES TRANSPORTS PARISIENS "RATP", 75271 Paris Cédex 06 (FR)
(72) Inventeur: Robert, Yann, 75001 Paris (FR); Wehowski, Frédéric, 77220 Gretz-Armainvilliers (FR); Mardinian, Grégory, 95160 Montmorency (FR)
(74) Mandataire: Dupuis-Latour, Dominique

(56) Documents cités:
- EP-A- 0 541 323
- EP-A- 0 649 110
- FR-A- 2 652 182
- GB-A- 2 187 916
- US-A- 3 914 762
- US-A- 4 600 829
- US-A- 4 654 658
- PATENT ABSTRACTS OF JAPAN vol. 011, no. 391 (P-649), 22 Décembre 1987 & JP-A-62 157391 (SONY CORP), 13 Juillet 1987,

## Description

L'invention concerne la communication sans contact entre une borne et un objet portatif.

De tels systèmes d'échange de données sans contact sont bien connus et, parmi les applications de cette technique, on trouve (de façon non limitative) le contrôle d'accès et le télépéage, par exemple pour l'accès et le péage des transports en commun.

Dans ce dernier exemple, chaque usager est muni d'un objet portatif du type "carte sans contact" ou "badge sans contact", qui est un objet susceptible d'échanger des informations avec une borne fixe en approchant le badge de cette dernière de manière à permettre un couplage non galvanique.

L'invention vise le cas où l'échange d'informations consécutif à ce couplage est opéré en faisant varier un champ magnétique produit par une bobine d'induction (technique connue sous le nom de "procédé par induction"). La borne comporte à cet effet un circuit accordé excité par un signal alternatif qui produit dans l'espace environnant un champ magnétique alternatif. L'objet portatif se trouvant dans cet espace détecte ce champ grâce à un circuit accordé sur la même fréquence et émet en retour des signaux en direction de la borne, établissant ainsi le dialogue de communication recherché.

Les avantages de cette technologie par induction sont bien connus, notamment la très bonne définition de la zone dans laquelle il peut y avoir échange d'informations et le coût très bas de la fonction communication, qui la font généralement préférer au couplage radioélectrique, plus coûteux et plus sensible aux variations de portée.

L'invention vise le cas particulier où la communication de l'objet portatif vers la borne est opérée par une technique de "modulation de phase" ou "modulation de réactance", c'est-à-dire dans laquelle, lorsque l'objet portatif détecte la présence d'un champ magnétique environnant, il modifie son circuit accordé de manière à faire varier la réactance de celui-ci entre deux états : résonant ou non résonant. Du côté de la borne, cette action est vue comme une perturbation du champ magnétique et entraîne une variation du déphasage entre les signaux produits par les moyens émetteurs et les signaux captés par les moyens récepteurs ; cette variation de phase (qui est d'autant plus grande que le badge est situé près de la borne) est transformée après démodulation en un signal d'amplitude variable contenant les données émises par l'objet portatif.

Cette technique particulière est en particulier décrite dans le FR-A-2 711 440, auquel on pourra se référer pour de plus amples développements.

La communication de la borne vers l'objet portatif est généralement assurée par une simple modulation d'amplitude, résultant d'une application ou non-application d'une tension au circuit accordé de la borne, comme cela est par exemple décrit dans le FR-A-2 640 830 auquel on pourra se référer pour de plus amples développements.

Dans les différents exemples, notamment ceux des documents précités, dans lesquels cette technique particulière a été mise en oeuvre, l'objet portatif était toujours alimenté par une pile interne.

On sait par ailleurs téléalimenter un objet portatif en lui transmettant de l'énergie magnétique.

Ainsi, le US-A-4 818 855 décrit un système sans fil opérant sur une fréquence unique (400 kHz) pour la communication et la téléalimentation ; de ce fait, une modulation spéciale est nécessaire pour continuer à téléalimenter (en champ magnétique) lorsque l'on communique (en champ électrique).

Le US-A-5 345 231 opère également sur une fréquence unique et présente le même inconvénient ; de plus ni la borne ni l'objet portatif ne fonctionnent à la résonance, ce qui implique une borne de forte puissance d'émission.

Dans le US-A-4 654 658, l'objet portatif comprend un circuit résonant unique pour la téléalimentation et pour la communication, ce circuit étant un circuit à réactance variable pour le retour d'information vers la borne. L'ensemble opère comme les systèmes précédents sur une fréquence unique, mais l'inconvénient précité (nécessité d'une modulation spéciale) est aggravé par le fait que, lorsque l'objet portatif fait varier sa réactance en cours de communication, il y a une perte importante d'énergie de téléalimentation puisque le circuit accordé se trouve alors hors résonance.

L'un des buts de la présente invention est de remédier aux divers inconvénients des propositions antérieures en proposant un système de communication sans contact entre des bornes et des objets portatifs téléalimentés par ces bornes, la téléalimentation aussi bien que la communication étant assurées par voie exclusivement inductive, et qui puisse tirer parti des avantages de la technique particulière de modulation de phase pour le retour d'information de l'objet portatif vers la borne.

L'invention propose à cet effet une borne du type générique connu précité, c'est-à-dire comportant : un premier circuit accordé comprenant une bobine de communication, pour rayonner un champ magnétique en direction d'un objet ou pour capter une perturbation modulée en phase de ce champ magnétique produite en réponse par cet objet ; et des moyens émetteurs-récepteurs coopérant avec le premier circuit accordé pour, d'une part, lui appliquer un signal alternatif modulé par des données à émettre vers l'objet ou, d'autre part, en recevoir un signal alternatif modulé par des données émises par l'objet.

De façon caractéristique de l'invention, cette borne comprend en outre : un second circuit accordé comprenant une bobine de téléalimentation, pour rayonner un champ magnétique en direction de l'objet afin d'alimenter celui-ci à distance ; des moyens émetteurs coopérant avec ce second circuit accordé, pour lui appliquer un signal alternatif de téléalimentation ; et des moyens pour produire simultanément et avec un déphasage constant, d'une part, le signal alternatif appliqué après modulation au premier circuit accordé et, d'autre part, le signal alternatif appliqué au second circuit accordé.

Les signaux alternatifs appliqués respectivement au premier et au second circuit accordé sont avantageusement harmoniques entre eux.

Cette configuration est particulièrement avantageuse car, comme le choix des fréquences respectives pour la communication et la téléalimentation est limité à des plages étroites autorisées compte tenu des diverses normes existantes, ces deux fréquences seront en pratique harmoniques entre elles.

Comme il est en outre souhaitable de choisir des fréquences relativement élevées, de l'ordre du mégahertz ou de la dizaine de mégahertz, pour limiter à un minimum le nombre de spires des bobines de communication et de téléalimentation pour ne pas grever le coût et l'encombrement de l'objet portatif, les deux fréquences en question sont relativement proches et l'on constate une diaphonie inductive entre bobine de communication et bobine de téléalimentation, diaphonie d'autant plus élevée que ces deux bobines sont rapprochées, et donc que l'on cherche à réaliser un objet portatif relativement compact. L'invention permet précisément d'éviter que le champ magnétique de téléalimentation ne présente par rapport au champ magnétique de communication un déphasage aléatoire, déphasage qui viendrait interférer avec les circuits reliés à la bobine de communication de la borne en induisant un déphasage parasite rendant la communication impossible.

Avec des fréquences harmoniques, les moyens pour produire simultanément et avec un déphasage constant les signaux alternatifs appliqués au premier et au second circuit accordé peuvent simplement comprendre un circuit oscillateur associé à un circuit diviseur de fréquence.

De préférence, la bobine de communication et la bobine de téléalimentation sont essentiellement concentriques, la bobine de communication étant notamment située à l'extérieur de la bobine de téléalimentation.

Avantageusement, les moyens émetteurs-récepteurs de communication coopèrent avec les moyens émetteurs de téléalimentation de manière à faire varier l'énergie appliquée au premier circuit accordé en proportion inverse du niveau d'absorption d'énergie par l'objet portatif et détecté par le second circuit accordé.

Le signal modulé par les données émises vers l'objet est typiquement un signal modulé en amplitude.

L'invention couvre également l'objet portatif utilisable avec une telle borne, et qui est du type général connu comprenant : un premier circuit accordé comprenant une bobine de communication, pour capter un champ magnétique en provenance d'une borne ou pour produire en réponse une perturbation modulée en phase de ce champ magnétique ; et des moyens émetteurs-récepteurs coopérant avec le premier circuit accordé pour, d'une part, lui appliquer un signal alternatif modulé par des données à émettre vers la borne ou, d'autre part, en recevoir un signal alternatif modulé par des données émises par la borne.

De façon caractéristique de l'invention, cet objet portatif comprend en outre : un second circuit accordé comprenant une bobine de téléalimentation, pour capter un champ magnétique de téléalimentation émis par la borne, ce champ magnétique de téléalimentation étant à une fréquence harmonique du champ magnétique de communication et présentant avec ce dernier un déphasage constant ; et des moyens récepteurs et convertisseurs, pour transformer le champ magnétique de téléalimentation en tension continue d'alimentation des circuits de l'objet.

D'autres caractéristiques et avantages de l'invention apparaîtront à la lecture de la description détaillée ci-dessous, faite en référence aux figures annexées.

La figure 1 est une représentation schématique des circuits de la borne selon l'invention.

La figure 2 est une représentation schématique des circuits de l'objet portatif selon l'invention.

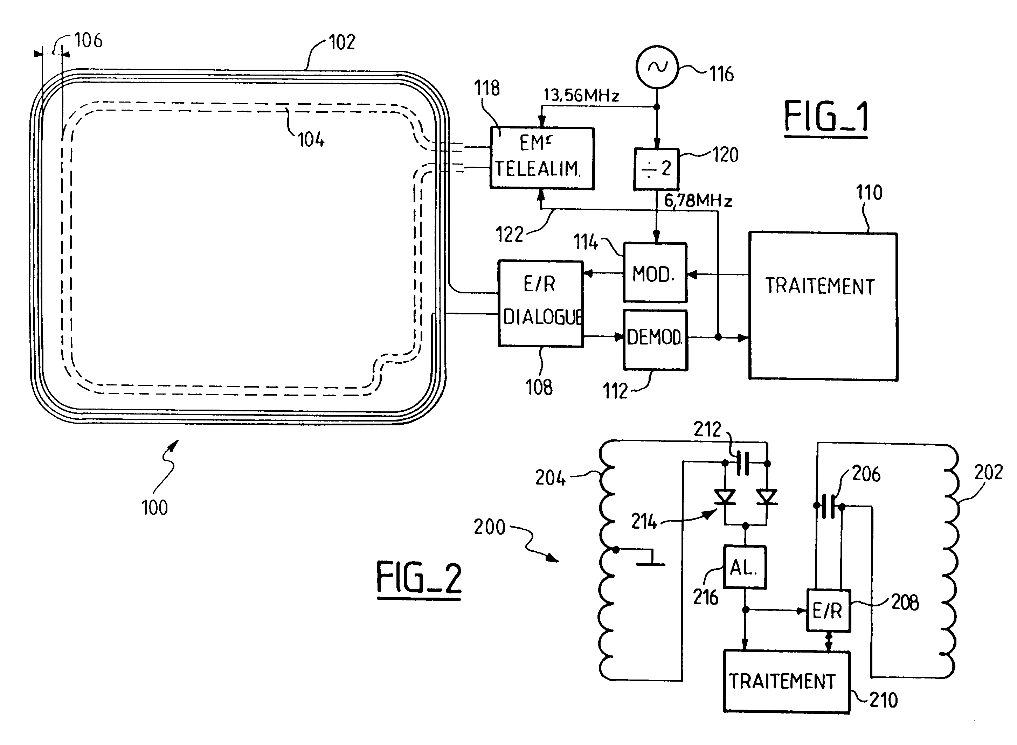

Sur la figure 1, la référence 100 désigne de façon générale une borne réalisée selon les enseignements de l'invention.

Celle-ci comporte une bobine d'induction 102 destinée à la communication, par exemple réalisée sous forme d'une pluralité (quatre dans l'exemple illustré) de spires gravées sur une face d'un circuit imprimé, et une bobine de téléalimentation 104, par exemple formée d'une spire unique (comme dans l'exemple illustré) ou d'une série de spires également gravées sur le circuit imprimé, notamment sur une autre face ou sur une autre couche de celui-ci.

Les bobines de communication 102 et de téléalimentation 104 font chacune partie d'un circuit RLC accordé, par exemple (mais de façon aucunement limitative) accordé sur une fréquence de 6,78 MHz pour la communication et de 13,56 MHz pour la téléalimentation. Le choix particulier de ces fréquences tient au fait qu'elles correspondent à des valeurs autorisées par les normes européennes pour ces fonctions respectives de communication et de téléalimentation et qu'elles sont en rapport harmonique entre elles. Leur valeur relativement élevée permet de concevoir des circuits avec des bobines possédant peu de spires, donc faciles et peu coûteuses à réaliser.

La topologie des deux bobines est avantageusement celle illustrée sur la figure 1, c'est-à-dire qu'elles sont disposées de manière essentiellement concentrique, la bobine de téléalimentation ayant une surface de spire inférieure à celle de la bobine de communication. On ménage un intervalle minimum 106 entre ces deux bobines pour limiter les phénomènes d'induction mutuelle entre elles ; cet intervalle 106 est déterminé de manière expérimentale et dépend notamment de la puissance de la téléalimentation.

La bobine de communication 102 est reliée à un circuit émetteur-récepteur 108 assurant le dialogue avec un objet portatif. Ce circuit 108 est relié à un démodulateur 112 des signaux reçus et un modulateur 114 des signaux à émettre, ces divers signaux étant traités par un circuit 110 comportant notamment un microcontrôleur et divers circuits de traitement numérique.

Ces circuits 108 à 110 sont en eux-mêmes connus, et l'on pourra se référer notamment aux documents précités, à savoir le FR-A-2 64 830 en ce qui concerne l'émission des signaux (modulation d'amplitude) et FR-A-2 711 440 en ce qui concerne la réception des signaux (modulation de phase due à la variation de réactance générée à l'intérieur de l'objet portatif distant et venant perturber le champ magnétique produit par l'émetteur du circuit 108).

De façon caractéristique de l'invention, on prévoit un oscillateur unique 116, commun à la fois aux circuits de téléalimentation et à ceux de dialogue. Il s'agit par exemple d'un oscillateur à 13,56 MHz appliqué à un circuit 118 formant l'émetteur de téléalimentation (émission d'une porteuse pure non modulée à 13,56 MHz appliquée au circuit accordé comprenant la bobine de téléalimentation 104). Ce même signal est également utilisé comme porteuse pour la modulation du signal de communication après division par deux dans un étage 120, pour donner les 6,78 MHz requis.

La porteuse de téléalimentation à 13,56 MHz et la porteuse de communication à 6,78 MHz seront ainsi deux signaux non seulement harmoniques entre eux mais aussi et surtout des signaux produits avec un déphasage constant, du fait de l'unicité de l'oscillateur 116. Du fait de cette constance, la téléalimentation ne perturbera plus le dialogue et l'on pourra ainsi simultanément téléalimenter l'objet portatif et communiquer avec lui.

Pour éviter une saturation des étages de communication, notamment des étages de détection de l'objet portatif, on asservit avantageusement la puissance émise par le circuit 118 à la distance entre objet portatif et borne. Cette information de distance est par exemple dérivée du niveau de tension continu après démodulation, comme illustré par exemple sur le dessin par la liaison 122 entre le démodulateur 112 et l'émetteur de téléalimentation 118.

L'asservissement sera tel que plus l'objet portatif sera près de la borne, plus le niveau de la porteuse de téléalimentation sera faible. Dans une forme simplifiée, on peut prévoir éventuellement un système à un ou plusieurs seuils, l'émetteur 118 pouvant être commuté entre deux ou plusieurs niveaux de puissance en fonction du niveau du signal démodulé.

Cet asservissement permet notamment d'assurer un dialogue jusqu'au contact de l'objet portatif avec le bobinage de la borne, sans aucune perturbation de ce dialogue par le champ de téléalimentation.

Diverses variantes sont bien entendu envisageables, notamment en ce qui concerne le choix des fréquences : pour éviter que les fréquences de communication et de téléalimentation ne soient trop proches, on peut par exemple choisir des fréquences respectivement de 6,78 MHz et 27,12 MHz (qui sont toujours harmoniques), ou de 13,56 et 27,12 MHz.

La figure 2 représente schématiquement un objet portatif adapté à la mise en oeuvre de l'invention.

Celui-ci, référencé 200, comporte une bobine de communication 202 et une bobine de téléalimentation 204 (qui ne sont pas nécessairement concentriques, à la différence de la borne).

De manière en elle-même classique, le bobinage de communication, qui forme avec la capacité 206 un circuit résonant accordé sur la fréquence utilisée (6,78 MHz en l'espèce), coopère avec un circuit d'émission-réception 208 assurant l'interfaçage avec un circuit 210 de traitement des données, typiquement un circuit comprenant un microcontrôleur et une mémoire de données.

La réception des informations (communication de la borne vers l'objet portatif) se fait par démodulation du signal recueilli aux bornes du circuit résonant 202, 206. L'émission d'informations (communication de l'objet portatif vers la borne) se fait en faisant varier la réactance du circuit accordé de la manière particulière enseignée dans le FR-A-2 711 440, afin de produire une perturbation modulée en phase du champ magnétique régnant dans l'environnement de l'objet portatif.

Au lieu d'alimenter l'objet portatif par une pile interne, comme tel était le cas auparavant, on utilise un circuit de téléalimentation comprenant la bobine 204 associée à une capacité 212 pour former un circuit accordé (sur 13,56 MHz en l'espèce) et un redresseur, par exemple un redresseur double alternance 214. L'énergie ainsi captée est convertie et stabilisée par un circuit 216 en une tension continue d'alimentation des divers circuits de l'objet portatif, notamment le circuit analogique émetteur-récepteur 208 et le circuit numérique de traitement 210. La mémoire de données du circuit 210 étant généralement une mémoire E²PROM, il n'est pas nécessaire de prévoir une quelconque alimentation de sauvegarde.

On dispose de cette manière d'un objet portatif téléalimenté dépourvu de pile, et ainsi à l'abri des problèmes liés à la durée de vie limitée et aux risques de défaillances des objets portatifs réalisés jusqu'à présent.

## Revendications

1. Une borne (100) de communication sans contact avec des objets portatifs, du type comprenant :
- un premier circuit accordé comprenant une bobine de communication (102), pour rayonner un champ magnétique en direction d'un objet (200) ou pour capter une perturbation modulée en phase de ce champ magnétique produite en réponse par cet objet, et
- des moyens émetteurs-récepteurs (108, 112, 114) coopérant avec le premier circuit accordé pour, d'une part, lui appliquer un signal alternatif modulé par des données à émettre vers l'objet ou, d'autre part, en recevoir un signal alternatif modulé par des données émises par l'objet,
borne caractérisée en ce qu'elle comprend en outre :
- un second circuit accordé comprenant une bobine de téléalimentation (104), pour rayonner un champ magnétique en direction de l'objet afin d'alimenter celui-ci à distance,
- des moyens émetteurs (118) coopérant avec ce second circuit accordé, pour lui appliquer un signal alternatif de téléalimentation, et
- des moyens (116, 120), pour produire simultanément et avec un déphasage constant, d'une part, le signal alternatif appliqué après modulation au premier circuit accordé et, d'autre part, le signal alternatif appliqué au second circuit accordé.

2. La borne de la revendication 1, dans laquelle les signaux alternatifs appliqués respectivement au premier et au second circuit accordé sont harmoniques entre eux.

3. La borne de la revendication 2, dans laquelle les moyens pour produire simultanément et avec un déphasage constant les signaux alternatifs appliqués au premier et au second circuit accordé comprennent un circuit oscillateur (116) et un circuit diviseur de fréquence (120).

4. La borne de la revendication 1, dans laquelle la bobine de communication et la bobine de téléalimentation sont essentiellement concentriques.

5. La borne de la revendication 4, dans laquelle la bobine de communication est située à l'extérieur de la bobine de téléalimentation.

6. La borne de la revendication 1, dans laquelle les moyens émetteurs-récepteurs de communication coopèrent avec les moyens émetteurs de téléalimentation de manière à faire varier l'énergie appliquée au premier circuit accordé en proportion inverse du niveau d'absorption d'énergie par l'objet portatif et détecté par le second circuit accordé.

7. La borne de la revendication 1, dans laquelle le signal modulé par les données émises vers l'objet est un signal modulé en amplitude.

8. Un objet portatif (200) pour la communication sans contact avec une borne (100), du type comprenant :
- un premier circuit accordé comprenant une bobine de communication (202), pour capter un champ magnétique en provenance d'une borne ou pour produire en réponse une perturbation modulée en phase de ce champ magnétique, et
- des moyens émetteurs-récepteurs (208) coopérant avec le premier circuit accordé pour, d'une part, lui appliquer un signal alternatif modulé par des données à émettre vers la borne ou, d'autre part, en recevoir un signal alternatif modulé par des données émises par la borne,
objet portatif caractérisé en ce qu'il comprend en outre :
- un second circuit accordé comprenant une bobine de téléalimentation (204), pour capter un champ magnétique de téléalimentation émis par la borne, ce champ magnétique de téléalimentation étant à une fréquence harmonique du champ magnétique de communication et présentant avec ce dernier un déphasage constant, et
- des moyens récepteurs et convertisseurs (214), pour transformer le champ magnétique de téléalimentation en tension continue d'alimentation des circuits de l'objet.

9. L'objet de la revendication 8, dans lequel le signal modulé par les données reçues de la borne est un signal modulé en amplitude.

## Claims

1. A terminal (100) for contactless communication with portable objects, the terminal being of the type comprising:
. a first tuned circuit comprising a communication coil (102) for radiating a magnetic field towards an object (200) or for picking up a phase-modulated disturbance of said magnetic field produced in response by said object; and
. transceiver means (108, 112, 114) co-operating with the first tuned circuit firstly to apply an alternating signal thereto which is modulated by the data to be transmitted to the object, or secondly to receive an alternating signal modulated by the data transmitted by the object;
the terminal being characterized in that it further comprises:
. a second tuned circuit comprising a remote power coil (104) for radiating a magnetic field towards the object in order to power it remotely;
. transmitter means (118) co-operating with said second tuned circuit to apply an alternating remote power supply signal thereto; and
. means (116, 120) for producing simultaneously and at a constant phase difference both the alternating signal applied after modulation to the first tuned circuit and the alternating signal applied to the second tuned circuit.

2. The terminal of claim 1, in which the alternating signals applied respectively to the first and second tuned circuits are mutually harmonic.

3. The terminal of claim 2, in which the means for producing simultaneously and at constant phase difference the alternating signals applied to the first and second tuned circuits comprise an oscillator circuit (116) and a frequency divider circuit.

4. The terminal of claim 1, in which the communication coil and the remote power coil are essentially concentric.

5. The terminal of claim 4, in which the communication coil is situated outside the remote power coil.

6. The terminal of claim 1, in which the communication transceiver means cooperate with the remote power transmitter means in such a manner as to cause the power applied to the first tuned circuit to vary in inverse proportion to the level of power absorbed by the portable object and detected by the second tuned circuit.

7. The terminal of claim 1, in which the signal modulated by the data transmitted to the object is an amplitude modulated signal.

8. A portable object (200) for contactless communication with a terminal (100), the object being of the type comprising:
. a first tuned circuit comprising a communication coil (202) for picking up a magnetic field from a terminal or for producing in response a phase-modulated disturbance of said magnetic field; and
. transceiver means (208) co-operating with the first tuned circuit firstly to apply thereto an alternating signal modulated by data to be transmitted to the terminal, and secondly to receive therefrom an alternating signal modulated by data transmitted by the terminal;
the portable object being characterized in that it further comprises:
. a second tuned circuit comprising a remote power coil (204) for picking up a remote power magnetic field transmitted by the terminal, said remote power magnetic field being at a frequency which is a harmonic of the communication magnetic field and presenting a constant phase difference relative thereto; and
. receiver and converter means (214) for transforming the remote power magnetic field into a DC voltage for powering the circuits of the object.

9. The object of claim 8, in which the signal modulated by the data received from the terminal is an amplitude-modulated signal.

## Patentansprüche

1. Kontaktloser Kommunikationsanschluß (100) mit tragbaren Objekten, vom Typ, aufweisend:
- eine erste abgestimmte Schaltung, die eine Kommunikationsspule (102) aufweist, um ein magnetisches Feld in Richtung eines Objektes (200) abzustrahlen oder um eine Störung aufzufangen, die in Phase mit dem elektrischen Feld moduliert ist, welches in Antwort durch das Objekt erzeugt wurde, und
- Emitter-Empfänger-Einrichtungen (108, 112, 114), welche mit der ersten abgestimmten Schaltung zusammenwirken, um einerseits ein Wechselstromsignal an sie anzulegen, das durch in Richtung auf das Objekt zu emittierende Daten moduliert ist, andererseits ein Wechselstromsignal davon zu erhalten, welches durch Daten, emittiert durch das Objekt, moduliert ist,
wobei der Anschluß dadurch gekennzeichnet ist, daß er unter anderem aufweist:
- eine zweite abgestimmte Schaltung, die eine Fernversorgungsspule (104) aufweist, um ein magnetisches Feld in Richtung des Objektes abzustrahlen, um dasselbe aus der Ferne zu versorgen,
- Emitter-Einrichtungen (118), welche mit der zweiten abgestimmten Schaltung zusammenwirken, um ein Wechselstrom-Fernversorgungs-Signal an sie anzulegen, und
- Einrichtungen (116, 120), um gleichzeitig und mit einer konstanten Phasenverschiebung, einerseits das an die erste abgestimmte Schaltung nach Modulation anlegte Weschselstromsignal, andererseits das an die zweite abgestimmte Schaltung angelegte Wechselstromsignal zu erzeugen.

2. Anschluß nach Anspruch 1, in welchem die an die erste bzw. an die zweite abgestimmte Schaltung angelegten Wechselstromsignale untereinander harmonisch sind.

3. Anschluß nach Anspruch 2, in welchem die Einrichtungen, um gleichzeitig und mit einer konstanten Phasenverschiebung die Wechselstromsignale zu erzeugen, welche an die erste und an die zweite abgestimmte Schaltung angelegt sind, eine Oszillatorschaltung (116) und eine Frequenzteilerschaltung (120) aufweisen.

4. Anschluß nach Anspruch 1, in welchem die Kommunikationsspule und die Fernversorgungsspule im wesentlichen konzentrisch sind.

5. Anschluß nach Anspruch 4, in welchem die Kommunikationsspule im Äußeren der Femversorgungsspule liegt.

6. Anschluß nach Anspruch 1, in welchem die Kommunikations-Emitter-Empfänger-Einrichtungen mit den Fernversorgungs-Emitter-Einrichtungen auf eine Weise zusammenwirken, um die an der ersten abgestimmten Schaltung angelegte Leistung im umgekehrten Verhältnis zum Energieniveau der Absorption durch das tragbare Objekt variieren zu lassen, und detektiert durch die zweite abgestimmte Schaltung.

7. Anschluß nach Anspruch 1, in welchem das Signal, moduliert durch die in Richtung des Objektes emittierten Daten, ein amplitudenmoduliertes Signal ist.

8. Ein tragbares Objekt (200) für die kontaktlose Kommunikation mit einem Anschluß (100), vom Typ, aufweisend:
- eine erste abgestimmte Schaltung, welche eine Kommunikationsspule (202) aufweist, um ein Magnetfeldes in Herkunft von einem Anschluß aufzufangen oder um in Antwort eine Störung, moduliert in Phase mit dem Magnetfeld, zu erzeugen, und
- Emitter-Empfänger-Einrichtungen (208), welche mit der ersten abgestimmten Schaltung zusammenwirken, um einerseits an diese ein Wechselstromsignal anzulegen, moduliert durch in Richtung des Anschlusses zu emittierende Daten, oder um andererseits ein Wechselstromsignal davon zu empfangen, moduliert durch vom Anschluß emittierte Daten,
wobei das tragbare Objekt dadurch gekennzeichnet ist, daß es unter anderem aufweist:
- eine zweite abgestimmte Schaltung, welche eine Fernversorgungsspule (204) aufweist, um ein durch den Anschluß emittiertes Fernversorgungs-Magnetfeld aufzufangen, wobei das Fernversorgungsmagnetfeld bei einer harmonischen Frequenz des Kommunikationsmagnetfeldes ist und mit dem letzteren eine konstante Phasenverschiebung aufweist, und
- Empfangs- und Konvertereinrichtungen (214), um das Fernversorgungsmagnetfeld in eine kontinuierliche Versorgungsspannung von Schaltungen des Objektes umzuwandeln.

9. Objekt nach Anspruch 8, in welchem das durch die von dem Anschluß empfangenen Daten modulierte Signal ein amplitudenmoduliertes Signal ist.
